**Europäisches Patentamt**

**European Patent Office**

**Office européen des brevets**

(11) Veröffentlichungsnummer: **0 309 641**

**A2**

## (12) EUROPÄISCHE PATENTANMELDUNG

(21) Anmeldenummer: **88106432.3**

(22) Anmeldetag: **21.04.88**

(51) Int. Cl.⁴: **G01N 1/20**

(30) Priorität: **29.09.87 DE 3732865**

(43) Veröffentlichungstag der Anmeldung:
**05.04.89 Patentblatt 89/14**

(84) Benannte Vertragsstaaten:
**AT BE CH DE ES FR GB GR IT LI LU NL SE**

(71) Anmelder: **MCK MASCHINENBAU GMBH & CO. KG**
**Porzer Strasse 70**
**D-5000 Köln 91(DE)**

(72) Erfinder: **Konetzka, Georg, Dipl.Ing.**
**Bonner Strasse 78**
**D-5000 Köln 90(DE)**

(74) Vertreter: **Vogeser, Werner, Dipl.-Ing. et al**
**Patentanwälte Hansmann & Vogeser**
**Albert-Rosshaupter-Strasse 65**
**D-8000 München 70(DE)**

(54) **Vorrichtung zur Entnahme und Teilung von Proben.**

(57) Die Erfindung beschreibteine Vorrichtung zur Entnahme und Teilung von Proben aus pulvrigen, mehligen oder körnigen Massengütern mit einem mit einer Förderschnecke und einem geschlitzten Aufnahmerohr ausgestatteten Probennehmer, der in eine das Massengut führende Förderleitung eingeschaltet ist und daraus ständig bzw. periodisch Probengut entnimmt, und mit einer Teilvorrichtung zur Abzweigung einer als Untersuchungsmuster dienenden, laborgeeigneten Teilmenge des Probengutes, wobei der Rest des Probengutes über eine Rückführöffnung wieder mit dem Massenstrom in der Förderleitung zusammenströmt. Gemäß der zugrunde liegenden Aufgabenstellung sollen bei einer solchen Vorrichtung Probennehmer und Teilvorrichtung miteinander integriert sein. Dazu wird vorgesehen, daß Probennehmer und Teilvorrichtung dadurch miteinander integriert sind, daß am Austragende der Förderschnecke ein umlaufender Drehschieber vorgesehen ist, dessen Durchgangsöffnung im verlaufe der Umlaufbewegung periodisch mit einem Auslaufrohr der Vorrichtung ausgerichtet ist und Teilmengen des Probengutes durchlässt, während seine Wandung während des übrigen Teiles der Umlaufbewegung das Auslaufrohr absperrt und das Probengut zur Rückführöffnung leitet. Dieses Prinzip wird mit weiteren Einzelheiten ausgestaltet.

EP 0 309 641 A2

## VORRICHTUNG ZUR ENTNAHME UND TEILUNG VON PROBEN

Die Erfindung betrifft eine Vorrichtung zur Entnahme und Teilung von Proben gemäß dem Oberbegriff den Anspruch 1.

Bekannt ist eine derartige Vorrichtung aus einem Prospekt EMCEKA-Gompper Nr. 1168/79. Bei der dort gezeigten Vorrichtung ist ein Förderschnecken-Probennehmer der in der in DE-PS 11 20 778 beschriebenen Art in eine Förderleitung eingeschaltet, um mittels seiner Förderschnecke und des geschlitzten Mantelrohres ständig bzw. periodisch Probengut zu entnehmen. Da die auf diese Weise entnommene Probenmenge vielfach noch weit größer als für Laboruntersuchungen oder dergleichen benötigt ist, weist die bekannte Vorrichtung noch eine als Reduktionsteiler dienende Teilvorrichtung auf, die den Probenentnahmestrom zur Abzweigung einer als Untersuchungsmuster dienenden, laborgeeigneten Teilmenge des Probengutes weiter reduziert. Probennehmer und Teilvorrichtung sind dabei über eine Rohrleitung miteinander verbundene, konstruktiv getrennte und auch getrennt angetriebene Aggregate.

Die Anordnung verschiedener Aggregate zur Probenentnahme und zur Probenteilung mit entsprechend getrennten Antrieben und verbindenden Rohrleitungen hat einen vergleichsweise hohen konstruktiven Aufwand mit entsprechenden Kosten und entsprechendem Platzbedarf bedingt und erfordert demgemäß auch erhöhten Unterhaltungs- und Wartungsaufwand.

Mit der vorliegenden Erfindung wurde die Aufgabe gestellt, einen Förderschnecken-Probennehmer und eine Teilvorrichtung miteinander zu integrieren und vorzugsweise mit einem einzigen Antrieb ohne zwischengeschaltete Rohrleitungen die Probenentnahme aus der den Massengutstrom führenden Förderleitung und die Abzweigung der als Untersuchungsmuster dienenden Teilmenge zu bewirken und den nicht benötigten Teil des Probengutes wieder in die Förderleitung eintreten zu lassen. Dabei soll eine besonders präzise Verstellbarkeit der Probenentnahme möglich sein.

Die Lösung dieser Aufgabe ist im Patentanspruch 1 gekennzeichnet.

Bei einem derartigen Aufbau wird der Antrieb der Förderschnecke zur Förderung des Probengutes zugleich für das periodische Freigeben und Abdecken des Auslaufrohres des Probenentnahmegerätes genutzt. Neben der damit erzielten konstruktiven Vereinfachung läßt sich auf diese Weise auch eine hohe Präzision der Probenteilung verwirklichen. Von besonderem Vorteil ist es, wenn der Drehschieber als eine liegende Doppelkegelanordnung ausgebildet ist, deren beide Teil-Kegelmäntel zur Einstellung der Größe der Durchgangsöffnung gegeneinander verdrehbar und feststellbar sind.

In den Unteransprüchen sind weitere vorteilhafte Ausgestaltungen und Weiterbildungen der Erfindung gekennzeichnet.

Zum Stand der Technik sei bemerkt, daß aus einem Prospekt Retsch-Anlagentechnik GmbH auch bereits ein Drehrohrteiler bekannt geworden ist, der in eine Förderleitung eingeschaltet wird und ein in einem Gehäuse mit schräg nach unten geneigter Lage umlaufendes Drehrohr aufweist. Bei jedem Umlauf gelangt dieses Drehrohr einmal in den Bereich eines seitlich an dem Gehäuse angebrachten Proben-Auslaufstutzens. Das durch das geneigte Drehrohr strömende Gut gelangt somit zu einem kleinen Teil in den Proben-Auslaufstutzen, während es im übrigen durch den unteren Teil des Gehäuses in die Fortsetzung der Förderleitung eintritt und weitergeführt wird. Dieser Drehrohrteiler dient zum Teilen größerer Probenmengen sowie zur Probennahme aus Materialströmen, eignet sich aber nicht zur Integrierung mit den bewährten Förderschnecken-Probennehmern und zur Ausnutzung des bei diesen ohnehin vorgesehenen Förderschneckenantriebes zugleich für die Probenteilung.

Es folgt die Beschreibung eines Ausführungsbeispieles der Erfindung anhand von Zeichnungen:

Figur 1 zeigt einen Abschnitt einer senkrechten Förderleitung für pulvrige, mehlige oder körnige Massengüter mit angebauter Vorrichtung zur Entnahme und Teilung von Proben.

Figur 2a zeigt einen senkrechten Schnitt durch die Vorrichtung zur Entnahme und Teilung von Proben längs der Linie A-D.

Figur 2b zeigt eine teilweise Stirnansicht der Vorrichtung zur Entnahme und Teilung von Proben.

Figur 3 zeigt eine der Figur 1 entsprechende Darstellung, jedoch mit einer schräg angeordneten Förderleitung und entsprechend angepaßter Hilfsförderschnecke für die Vorrichtung zur Entnahme und Teilung von Proben.

Die in den Zeichnungen dargestellte Vorrichtung zur Entnahme und Teilung von Proben dient zur Entnahme repräsentativer Teilmengen aus in einer Förderleitung 1 geführten Massengutströmen von pulvriger, mehliger oder körniger Beschaffenheit, beispielsweise Körnerfrüchte, Zement, Kohlestaub oder dergleichen. Die entnommene Teilmenge soll für Untersuchungszwecke nur einen minimalen Teil des während längerer Zeitdauer durch die Förderleitung geförderten Massengutstromes enthalten, aber dennoch repräsentativ für die Zusammensetzung sein Die einzelnen Teilmengen für die Untersuchung liegen beispielsweise in der Größenordnung von 1 Liter, der bei ständiger Entnahme von Probengut aus der Förderleitung während beispielsweise einer Stunde zusammengetragen wird und dann über den Auslauf 3 in ein Aufnahmegerät 4 gelangt.

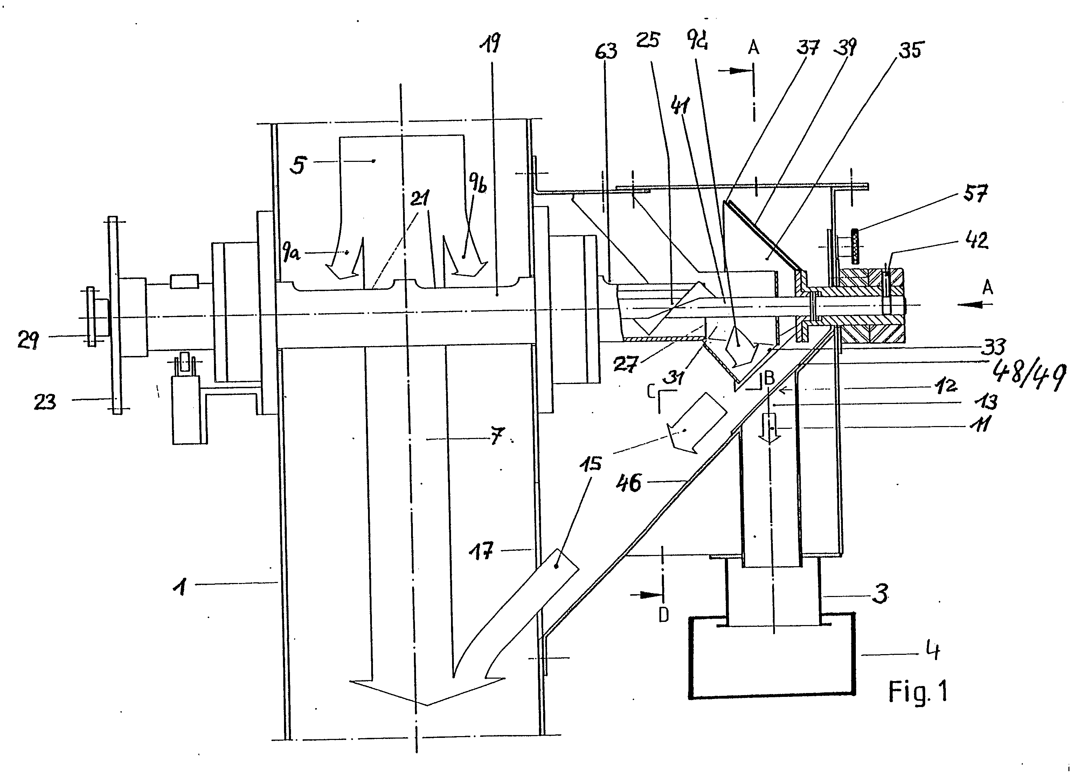

In Figur 1 ist durch flächige Pfeile die Aufteilung des gesamten Massengutstromes 5 in einen verbleibenden Hauptförderstrom 7 und einen Probeentnahmestrom 9a, 9b veranschaulicht. Von diesem Probenentnahmestrom werden dann mittels der näher zu beschreibenden Teilvorrichtung 10 die zur Untersuchung dienenden, laborgeeigneten Teilmengen 11 durch das Auslaufrohr 13 dem Aufnahmegefäß 4 zugeführt, während der restliche Rückführstrom 15 dann über eine Rückführöffnung 17 wieder in die Förderleitung 1 eingeführt und mit dem Massengutstrom vereinigt wird.

Zur Entnahme der Probenentnahmeströme 9a, 9b aus dem Massengutstrom 5 dient ein umlaufendes Aufnahmerohr 19 mit in Längsrichtung verlaufenden Schlitzen 21. Ein Antriebsrad 23 für das Aufnehmerohr 19 ist bei 23 angedeutet. Das Aufnahmerohr 19 erstreckt sich über die ganze Breite der Förderleitung 1. Innerhalb des Aufnahmerohres 19 läuft eine Förderschnecke 25 um und in diese treten bei nach oben weisenden Schlitzen 21 des umlaufenden Aufnahmerohres 19 die Probenentnahme ströme 9a, 9b ein und werden dann durch die Drehung der Förderschnecke 25 nach rechts zu deren Austragende 27 gefördert. Die Förderschnecke 25 ist dazu mit einem eigenen Antriebsrad 29 ausgerüstet.

An dem Austrittende 27 der Förderschnecke aus dem Aufnahmerohr ist eine Leiteinrichtung 31 vorgesehen durch welche der vereinigte Probenentnahmestrom 9c einer Austragöffnung 33 zuströmt, die mittels eines nun näher zu beschreibenden Drehschiebers periodisch zum Auslaufrohr 13 hin freigelegt oder davon getrennt wird.

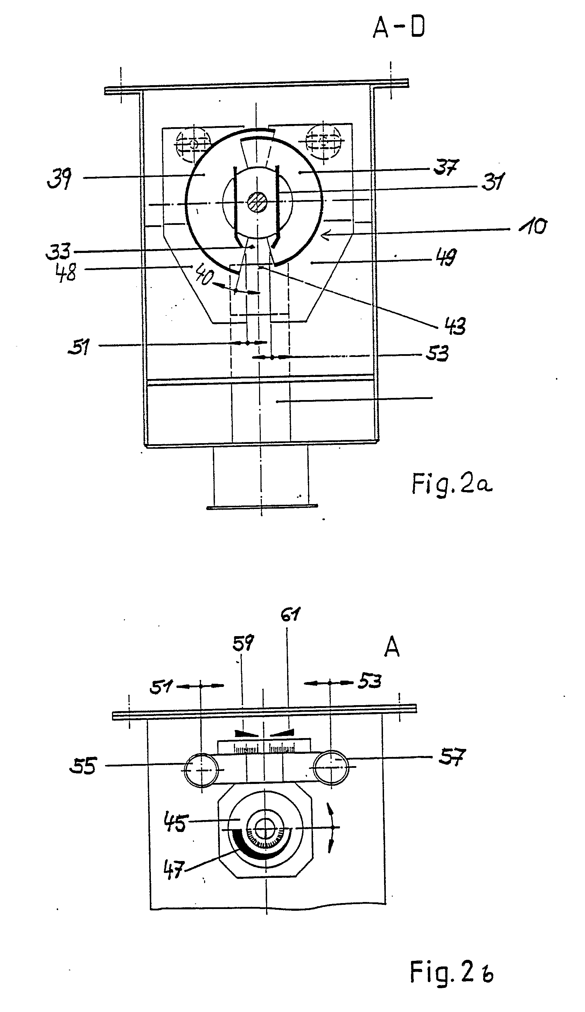

Der Drehschieber wird von einer Doppelkegelanordnung 35 gebildet, die von zwei Teil-Kegelmänteln 37 und 39 gebildet wird. Der innere Teil-Kegelmantel 37 ist in der dargestellten Weise fest mit der Welle 41 der Förderschnecke 25 verbunden. Der äußere Teil-Kegelmantel 39 ist auf der Welle 41 in verschiedenen Drehstellungen feststellbar und läuft dann auch mit der Welle 41 der Förderschnecke 25 um. Die Verstellbarkeit des äußeren Teil-Kegelmantels 39 ist in Figur 2a durch einen Doppelpfeil 40 angedeutet. Man sieht dort, daß durch diese Verstellung eine zwischen den beiden TeilKegelmänteln bestehende Schlitzöffnung als Durchgangsöffnung 43 für den Probenentnahmestrom 9c größer oder kleiner gestellt werden kann. Der Stellmechanismus für den äußeren Teil-Kegelmantel 39 ist bei 42 in Figur 1 schematisch angedeutet. Er weist in der Figur 2b veranschaulichten Weise auf seinem Stellgriff 45 eine mit einer Stellskala zusammenwirkende Anzeigemarkierung 47 auf.

Die feststehende Leiteinrichtung 31 und der von der Doppelkegelanordnung 37, 39 gebildete Drehschieber sorgen für eine gesicherte Übergabe der Proben am Austragende der Schnecke ohne unerwünschte Produkttrennung mittels Fliehkraft.

Unterhalb der Austragöffnung 33 weist das Gehäuse des Probenentnahmegerätes eine dem Kegelwinkel der Doppelkegelanordnung 37, 39 entsprechend geneigte Gehäusewand 46 auf, von welcher das Auslaufrohr 13 des Probenentnahmegerätes nach unten verläuft. Am unteren Ende dieser geneigten Gehäusewandung 46 befindet sich die Rückführöffnung 17 zur Wiedereinführung des nicht benutzten Teiles des Probenentnahmestromes in die Förderleitung 1. Es handelt sich um denjenigen Teil 15 des Probenentnahmestromes 9c, der durch die Wandung eines der beiden Teil-Kegelmäntel 37, 39 nach unten abgedeckt ist und das Probengut also nicht nach unten in das Auslaufrohr 13 hindurchfallen kann, sondern durch die geneigte Kegelmantelfläche in Richtung auf die geneigte Gehäusewandung 46 geleitet wird.

Zur Feineinstellung der Probenteilung sind zusätzlich zu der Verstellbarkeit der beiden Teil-Kegelmäntel 37 und 39 mit der dazwischen befindlichen Schlitzöffnung 43 über der Zulauföffnung des Auslaufrohres 13 beidseitig einstellbare Schieber 48, 49 vorgesehen. In der durch die Doppelpfeile 51, 53 angedeuteten Weise lässt sich auf diese Weise der zwischen diesen Schiebern befindliche Schlitz nach Wunsch verstellen. Dazu sind aussen am Gehäuse des Probenentnahmegerätes Stellgriffe 55, 57 und auch zugehörige Stellmarkierungen 59 und 61 vorgesehen.

Mit einem so aufgebauten Probenentnahmegerät lassen sich auf einfache Weise repräsentative Teilmengen eines fortlaufenden Massengutstromes präzis abteilen. Dabei ist die Vorrichtung zur Entnahme und Teilung von Proben von kompaktem Aufbau mit einem einzigen Antrieb und bedarf auch nicht zwischengeschalteter Rohrleitungen zwischen Einzelaggregaten des Probenentnahmegerätes.

Damit bei dem waagerechten Einbau des Probennehmers mit integrierter Probenteilung kein Material in dem als Aufnahmerohr dienenden geschlitzten Mantelrohr 19 zurückbleibt, ist dieses Rohr auch im Auslaufbereich mit einem Leerlaufschlitz 63 versehen. Dieser ist so angeordnet, daß bei Probennahmestart etwa in dem Aufnahmerohr befindliches Restmaterial sofort dem Rücklauf übergeben wird.

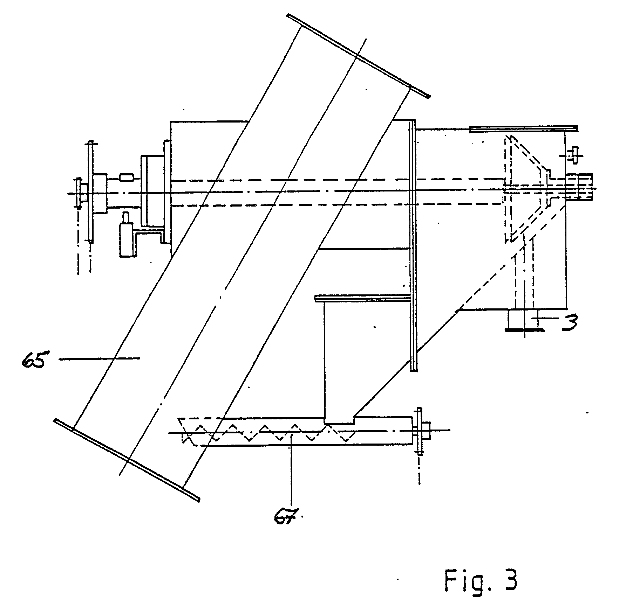

Die in Figur 3 gezeigte Ausführungsform der Vorrichtung zur Entnahme und Teilung von Proben entspricht im wesentlichen derjenigen nach den voranstehenden Figuren. Wegen des Einbaues in eine schräg geneigte Förderleitung 65 ist aber eine zusätzliche Hilfs-Förderschnecke 67 vorgesehen, welche für eine Rückführung des nicht dem Proben-Sammelbehälter 3 zugeführten Materials in die Förderleitung sorgt.

**Ansprüche**

1. Vorrichtung zur Entnahme und Teilung von Proben aus pulverigen, mehligen oder körnigen Massengütern mit einem mit einer Förderschnecke und einem geschlitzten Aufnahmerohr ausgestatteten Probennehmer, der in eine das Massengut führende Förderleitung eingeschaltet ist und daraus ständig bzw. periodisch Probengut entnimmt, und mit einer Teilvorrichtung zur Abzweigung einer als Untersuchungsmuster dienenden, laborgeeigneten Teilmenge des Probengutes, wobei der Rest des Probengutes über eine Rückführöffnung wieder mit dem Massenstrom in der Förderleitung zusammenströmt **dadurch gekennzeichnet,** daß Probennehmer (19, 25) und Teilvorrichtung (10) dadurch miteinander integriert sind, daß am Austragende (27) der Förderschnecke (25) ein umlaufender Drehschieber (35) vorgesehen ist, dessen Durchgangsöffnung (43) im Verlaufe der Umlaufbewegung periodisch mit einem Auslaufrohr (13) der Vorrichtung ausgerichtet ist und Teilmengen (11) des Probengutes durchlässt, während seine Wandung während des übrigen Teiles der Umlaufbewegung das Auslaufrohr (13) absperrt und das Probengut zur Rückführöffnung (17) leitet.

2. Vorrichtung nach Anspruch 1, **dadurch gekennzeichnet,** daß Förderschnecke (25) und Drehschieber (35) auf einer gemeinsamen Welle zu gemeinsamen Umlauf angeordnet sind.

3. Vorrichtung nach Anspruch 1 oder 2, **dadurch gekennzeichnet,** daß der Drehschieber (35) als eine liegende Doppelkegelanordnung (35) ausgebildet ist, deren beide Teil-Kegelmäntel (37, 39) zur Einstellung der Größe der Durchgangsöffnung (43) gegeneinander verdrehbar und feststellbar sind.

4. Vorrichtung nach Anspruch 3, **dadurch gekennzeichnet,** daß die Gehäusewandung (46) des Probenentnahmegerätes unterhalb der Austragöffnung (33) der Förderschnecke (25) und des Auslaufrohres (13) eine dem Kegelwinkel der Doppelkegelanordnung (35) entsprechende Neigung hat.

5. Vorrichtung nach Anspruch 4 für senkrecht verlaufende Förderleitungen, **dadurch gekennzeichnet,** daß die entsprechend der Doppelkegelanordnung (35) geneigte Gehäusewandung (46) des Probenentnahmegerätes unmittelbar an der Rückführöffnung (17) der Förderleitung (1) mündet.

6. Vorrichtung nach Anspruch 4 für schräg verlaufende Förderleitungen, **dadurch gekennzeichnet,** daß zur Überbrückung des Abstandes zwischen dem unteren Ende der entsprechend der Neigung des Doppelkegels (35) verlaufenden Gehäusewandung [46] des Probenentnahmegerätes und der Förderleitung (65) eine Hilfs-Förderschnecke (67) dient.

7. Vorrichtung nach einem oder mehreren der voranstehenden Ansprüchen, **dadurch gekennzeichnet,** daß zur Feineinstellung der Probenteilung im Bereich der Zulauföffnung (12) des Auslaufrohres (13) unterhalb der von dem Doppelkegel-Drehschieber (35) gesteuerten Austragöffnung (33) der Förderschnecke (25) einseitig oder beidseitig einstellbare Schieber (48, 49) vorgesehen sind.

8. Vorrichtung nach einem oder mehreren der voranstehenden Ansprüche, **dadurch gekennzeichnet,** daß der zur Einstellung der Drehschieber-Durchgangsöffnung (43) auf der Welle (41) der Förderschnecke (25) verdrehbare Teil-Kegelmantel (39) einen aus dem Gehäuse des Probenentnahmegerätes herausgeführten Stellgriff (45) und eine Stellmarkierung (47) aufweist.

9. Vorrichtung nach Anspruch 7 oder 8, **dadurch gekennzeichnet,** daß die einstellbaren Schieber (48, 49) für die Zulauföffnung (12) des Auslaufrohres (13) aus dem Gehäuse des Probenentnahmegerätes herausgeführte, arretierbare Stellgriffe (55, 57) und Stellmarkierungen (59, 61) aufweisen.

10. Vorrichtung nach einem oder mehreren der voranstehenden Ansprüche, **dadurch gekennzeichnet,** daß sich die den DoppelkegelDrehschieber (35) antreibende Förderschnecke (25) in dem geschlitzten Aufnahmerohr (19) über die gesamte Breite der Förderleitung (l,65)erstreckt.

11. Vorrichtung nach einem oder mehreren der voranstehenden Ansprüche, **dadurch gekennzeichnet,** daß das Aufnahmerohr im Auslauf bereich der Förderschnecke mit einem Leerlaufschlitz (63) versehen ist, durch welchen bei Probennahmestart etwa in dem Mantelrohr befindliches Restmaterial sofort dem Rücklauf übergeben wird.

12. Vorrichtung nach einem oder mehreren der voranstehenden Ansprüche, **gekennzeichnet durch** eine kastenförmige Leiteinrichtung (31) mit einer Austragöffnung (33), die in das Innere der Drehschieber-Doppelkegelanordnung hineinragt.

Fig. 1

EP 0 309 641 A2

A-D

39
37
31
10
33
48
40
43
49
51
53

Fig. 2a

61

59

A

51
53

55
57

45
47

Fig. 2b

65

67

3

Fig. 3